# EUROPEAN PATENT APPLICATION

(11) **EP 1 720 267 A1**
(43) Date of publication of application: **08.11.2006**
(21) Application number: 05719110.8
(22) Date of filing: 15.02.2005
(51) Int. Cl.: H04B 7/26

(54) **MOBILE COMMUNICATION SYSTEM AND MOBILE COMMUNICATION METHOD**

(30) Priority: 25.02.2004 JP 2004050048
(71) Applicant: NEC CORPORATION, Minato-ku, Tokyo 108-8001 (JP)
(72) Inventor: SUDA, Yukinori, Tokyo 1088001 (JP)
(74) Representative: Betten & Resch
(86) International application number: PCT/JP2005/002208
(87) International publication number: WO 2005/081428

(57) **Abstract**

There is provided a technique for ensuring that the order in which a terminal, when performing a three-party handover, receives packets is the same as the order in which a transmission terminal transmits those packets. When a terminal device successively handovers among a plurality of radio base station routers, a radio base station router serving as an anchor during the handovers buffers packets addressed to the terminal device, and forwards those packets by switching between a tunnel between a radio base station from which the terminal device moves out and the anchor radio base station and a tunnel between the anchor radio base station and a base station to which the terminal device moves.

## Description

### TECHNICAL FIELD:

The present invention relates to a handover technique in a mobile communication system using an IP network, and in particular, relates to a packet forwarding technique when a terminal in communication performs a handover.

### BACKGROUND ART:

In a mobile communication system using an IP network, when a terminal performs a handover to a different IP sub-network, the IP address of the terminal must be changed, and therefore IP level handover control is required.

Currently, IETF (Internet Engineering Task Force) has studied Mobile Ipv6 and FMIPv6 (Fast Handovers for Mobile IPv6) for shortening the handover latency in Mobil Ipv6 as IP level handover techniques.

Since, FMIPv6 is provided with simple routers except edges in the IP mobile communication network, only an access router at the edge is provided with a handover control function and supports the handover for the terminal. Details of Mobile IPv6 and FMIPv6 are described in draft-ietf-mobileip-IPv6-21.txt and draft-ietf-mobileip-fast-mIPv6-06.txt, respectively.

The operating procedure is explained below when a handover is performed by using FMIPv6.

At present, the terminal is connected to access router (hereinafter, called radio base station router) A provided with a radio base station function. In the case of this terminal performs a handover to radio base station router B, the terminal make a request of radio base station router A to forward packets addressed to the terminal after the handover is completed. Radio base station router A, which receives this request, forwards the packets addressed to the terminal to radio base station router B by using the IP tunneling technique. In this situation, when the terminal performs a handover to another radio base station router C, radio base station router A becomes an anchor, a tunnel between radio base station router B and radio base station router C is newly produced while the tunnel between radio base station router A and radio base station router B is maintained, the packets addressed to the terminal are transmitted to radio base station router C to which the terminal moves, by using two tunnels until the link-level handover of the terminal is completed. After that, when the link-level handover of the terminal is completed, a new tunnel is further produced between radio base station router A and radio base station router C, radio base station router A switches the forward destination from radio base station router B to radio base station router C, and the packets addressed to the terminal are transmitted by using the tunnel, which is newly produced. The tunnel between radio base station router A and radio base station router B and the tunnel between radio base station router B and radio base station router C are each automatically reset by the timeouts that are determined when the tunnels have been produced. Of the above-mentioned handovers, the former is called two-party handover and the latter is called a three-party handover.

There is a problem that a packet loss generates when the two-party handover is performed in FMIPv6. To solve this problem, for example, Reference 1 discloses a technique that the radio base station router from which a terminal moves out buffers the packets addressed to the terminal during the handover of the terminal, and the radio base station router from which the terminal moves out restarts to forward the packets to the radio base station router to which the terminal moves, after the handover is completed.

Reference 1: Japanese Patent Laid-Open No. 2003-047037 (JP, 2003-047037A)

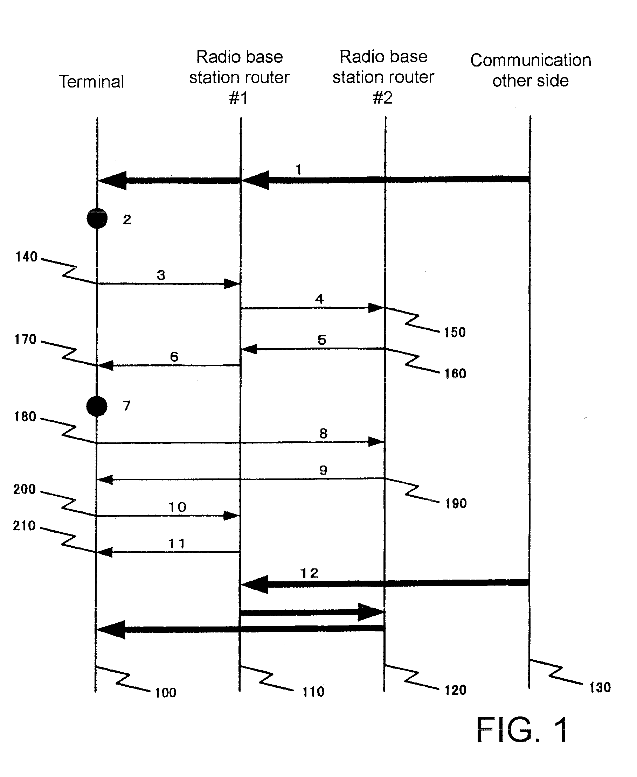

The above-mentioned handover method is explained with reference to FIG. 1. In this explanation, it is assumed that the terminal performs a handover to radio base station router #2 through radio base station router #1 in communication. FIG. 1 shows transmission/reception packet sequence 100 of the terminal, transmission/reception packet sequence 110 of radio base station router #1, transmission/reception packet sequence 120 of radio base station router #2, and transmission/reception packet sequence 130 of a communication other side.

The terminal communicates with the communication other side through radio base station router #1 (Step 1).

When the terminal determines the handover from radio base station router #1 to radio base station router #2 because of deterioration in the signal reception power from the terminal to radio base station router #1 or the like (Step 2), the terminal transmits PrRtSol (Router Solicitation for Proxy) message 140 to radio base station router #1 (Step 3). Because the source IP address that is received by the terminal from the communication other side is an IP address of the communication other side, no HTT (Handover To Third) flag that indicates a third-party handover is set in this PrRtSol message.

Radio base station router #1 transmits HI (Handover Initiate) message 150 to radio base station router #2, when receiving PrRtSol message 140 (Step 4). HI message 150 includes a CoA (Care of Address) which the terminal uses under radio base station router #2 and a timer value used to delete the CoA and the tunnel that are currently used by the terminal.

Radio base station router #2, when receiving HI message 150, checks the CoA, and, when determining that permission of the use is given, returns HACK (Handover Acknowledge) message 160 that includes information indicating permission to perform a handover, to radio base station router #1, (Step 5). Radio base station router #1, when receiving HACK message 160 and detecting that the handover of the terminal is permitted, buffers the packets addressed to the terminal and informs the terminal of the CoA used in the handover destination by using PrRtAdv (Proxy Router Advertisement) message 170 (Step 6). The terminal, when receiving PrRtAdv message 170, performs the link-level handover (Step 7), and transmits Fast-Neighbor Advertisement (FNA) message 180 indicating that the handover is finished, on completion of the handover, to radio base station router #2 (Step 8).

Radio base station router #2, when receiving FNA message 180, returns Neighbor Advertisement (NA) message 190 to the terminal (Step 9).

The terminal, when receiving NA message 190, transmits FBU (Fast-Binding Update) message 200 including a new CoA, in order to request radio base station router #1 to forward the packets addressed to the terminal (Step 10).

Radio base station router #1 returns FBACK (Fast-Binding Acknowledge) massage 210 to the terminal (Step 11) and encapsulates the buffered packets addressed to the terminal and forwards the packets to the CoA notified by FBU message 200. In this way, the packets addressed to terminal 50 which are transmitted from the communication other party, are forwarded to the terminal through radio base station router #1 and radio base station router #2 (Step 12).

Hoverer, in a case that the three-party handover is performed by using FMIPv6, when the radio base station router serving as an anchor switches a forwarding tunnel, there is a possibility that the order of the packets received by the terminal changes due to a difference in transmission path lengths.

Also, because each of all radio base station routers has to control two forwarding tunnels, the control in the radio base station router is complicated.

Further, when the technique described in Document 1 is used, the order of the packets is not changed, however, it is necessary to control two forwarding tunnels between the radio base station router serving as an anchor and the radio base station router from which the terminal moves out and between the radio base station router from which the terminal moves out and the radio base station router to which the terminal moves, and therefore, the control in the radio base station router is complicated.

Also, since the forwarding path is a path through each radio base station router, the transmission delay becomes large. Further, when handovers are continuously performed plural times, the complexity of management and the transmission delay are significantly increased.

### DISCLOSURE OF INVENTION:

Accordingly, in view of the above problems, the present invention has as an object to provide a technique for ensuring that the order in which a terminal, when performing a three-party handover, revives packets is the same as the order in which a transmission terminal transmits those packets, to solve the above problems.

Also, the present invention has as another object to provide a technique for simplifying the control procedure when the terminal performs the three-party handover, to solve the above problems.

Further, the present invention has as further another object to provide a technique for minimizing the transmission delay in communication after handovers are successively performed, to solve the above problems.

The first invention to solve the above problems is a mobile communication system including a plurality of radio base stations and a terminal device that can connect with the radio base stations, comprising:
deterioration detection means, in a state that the terminal device handovers from a first radio base station to a second radio base station and performs communication through a path which passes through the first radio base station, for detecting deterioration in a communication state between the terminal device and the second radio base station; and
distribution means, when the terminal device performs a handover to a third radio base station, caused by that the deterioration in the communication state is detected, in addition to the packets addressed to the terminal device, which start to be buffered by the first radio base station before the terminal device performs a handover and are buffered by the first radio base station after the handover of the terminal device is completed, for distributing packets addressed to the terminal device, which are newly received, to the terminal device through the third radio base station, in an order of reception.

The deterioration detection means may determine deterioration in the communication state by one of a detection result of a signal reception power, a bit error rate, and packet error rate.

Also, the deterioration detection means may be arranged in the terminal device or in the radio base station.

Also, another mobile communication system according to the present invention may further include request means for requesting that the second radio base station to make the first radio base station buffer the packets addressed to the terminal device before the terminal device performs the handover.

Further, in another mobile communication system according to the present invention, the terminal device may have change means for changing a radio base station to which the terminal device is going to perform a handover, to another radio base station, in accordance with a result of researching a communication state with another radio base station.

According to the present invention, in a mobile communication system, when the terminal performs a three-party handover, the order of packets received by the terminal can be prevented from being changed. As its reason, before the terminal starts the handover, a radio base station router serving as an anchor starts to buffer packets addressed to the terminal, and after the handover of the terminal is completed, the packets addressed to the terminal, which are buffered, are forwarded to a radio base station router as an handover destination in the order of reception.

Further, according to the present invention, in a mobile communication system, tunnels managed by the radio base station router can be reduced, and the control of the radio base station routers can be simplified. As its reason, the packets addressed to the terminal are forwarded by using only two tunnels between the radio base station router serving as an anchor and a radio base station router from which a terminal moves out and between the anchor radio base station router and a radio base station router to which the terminal moves.

Also, according to the present invention, it is possible to minimize a transmission delay in communication after performing successively handovers. As its reason, the communication path after the terminal performs the three-party handover does not pass through the radio base station router from which the terminal moves out, but only through the anchor radio base station router and the radio base station router to which the terminal moves.

### BRIEF DESCRIPTION OF THE DRAWINGS:

FIG. 1 is an operation sequence diagram of a two-party handover for explaining the conventional art.
FIG. 2 is a network configuration diagram for explaining the first embodiment according to the present invention.
FIG. 3 is a configuration diagram of a radio base station router for explaining the first embodiment according to the present invention.
FIG. 4 is a configuration diagram of a terminal for explaining the first embodiment according to the present invention.
FIG. 5 is an operation sequence diagram of a three-party handover for explaining the first embodiment according to the present invention.
FIG. 6 is a configuration diagram for explaining an information processing unit in the second embodiment according to the present invention.

### BEST MODE FOR CARRYING OUT THE INVENTION:

According to the present invention, when the terminal device successively handovers among a plurality of radio base station routers, a radio base station router serving as an anchor during the handovers buffers the packets addressed to the terminal device. Then, those packets are forwarded by switching between a tunnel between the anchor radio base station and a radio base station from which the terminal device moves out and another tunnel between the anchor radio base station and a radio base station to which the terminal device moves.

Hereinafter, specific embodiments are explained.

### (First Embodiment)

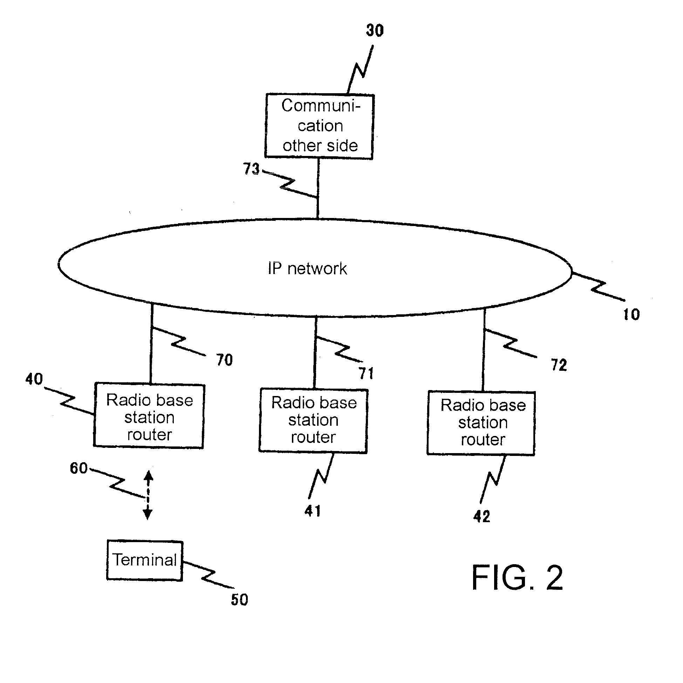

The mobile communication system according to the first embodiment of the present invention is explained with reference to the network configuration diagram shown in FIG. 2. As shown in FIG. 2, in the mobile communication system according the present embodiment, three radio base station routers 40, 41, 42 and communication other party 30 of a terminal are connected to Internet 10 through wired links 70 to 73, and terminal 50 communicates with communication other party 30 through wireless link 60.

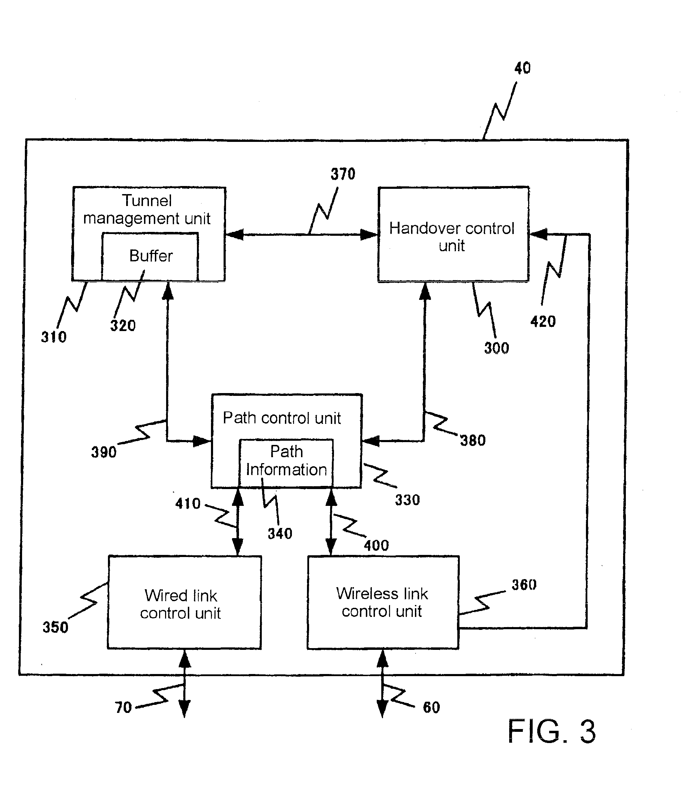

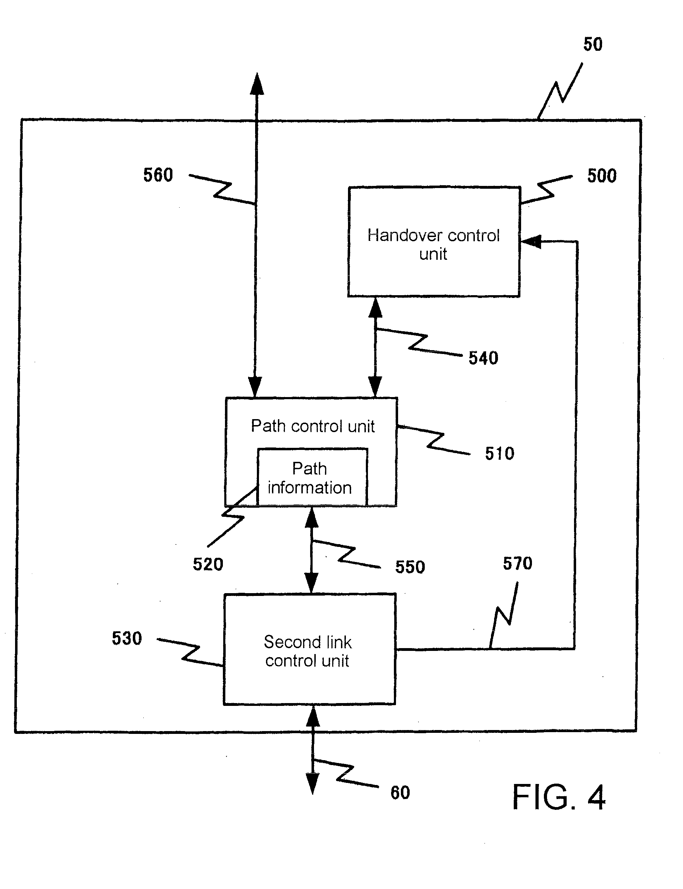

Successively, explanations are given of the configurations of terminal 50 and radio base station router 40 (or 41, 42) in the mobile communication system according to the present embodiment with reference to FIGs. 3 and 4. Incidentally, in FIG. 3, explanations are given while radio base station router 40 is taken as an example, and radio base station routers 41 and 42 are configured similarly.

As shown in FIG. 3, radio base station router 40 includes handover control unit 300, tunnel management unit 310, path control unit 330, wired link control unit 350, and wireless link control unit 360.

Handover control unit 300 has a management function for a handover state in terminal 50 and a termination function of signaling with terminal 50 and signaling with another radio base station router, and changes path information 340 held by path control unit 330 through handover control interface 380 in order to perform proxy reception of the packets addressed to the terminal during the handover.

Tunnel management unit 310 performs proxy reception of the packets addressed to the terminal during the handover through packet transmission/reception interface 390, and holds the packets in internal buffer 320. Further, tunnel management unit 310, when the handover of terminal 50 is completed, encapsulates the packets addressed to terminal to in buffer 320 on the basis of an instruction notified from handover control unit 300 through tunnel control interface 370 according to IP-in-IP and buffers the packets addressed to terminal 50, which are newly received, in parallel with outputting the encapsulated packet to path control unit 330 through packet transmission/reception interface 390.

Path control unit 330, when receiving the packets from first link control unit 350 through first link control interface 410, from second link control unit 360 through second link control interface 400, from handover control unit 300 through handover control interface 380, or from tunnel management unit 310 through packet transmission/reception interface 390, forwards the received packets in accordance with path information 340 held in path control unit 330, i.e., determination whether the transmission path is the wired link or the wireless link. Also, path control unit 330 passes the received packets to handover control unit 300 when the received packets are signaling among the radio base station routers and the terminal, and passes the received packets to the tunnel management unit when the received packets are packets addressed to the terminal during the handover.

Wireless link control unit 360 monitors the state of the link, and, when reception characteristic deterioration, link establishment, and link disconnection occur, notifies handover control unit 300 of them as trigger information through link trigger interface 420.

FIG. 4 is a configuration example of terminal 50.

Terminal 50, as shown in FIG. 4, includes second link control unit 530, path control unit 510, and handover control unit 500.

Second link control unit 530 passes the packets received through wireless link 60 to path control unit 510 through second link control interface 550, while transmitting the packets passed from path control unit 510 to wireless link 60. Also, second link control unit 530 monitors the state of link, and, when reception characteristic deterioration, link establishment, and link disconnection occur, notifies handover control unit 500 of them as trigger information through link trigger interface 570.

Path control unit 510 holds path control information 520 inside thereof, and, when receiving the packets, outputs the packets that are encapsulated by CoA (Care-of Address) to handover control unit 500 and the other packets to high-level layer interface 560. Also, path control unit 510 processes the packets received through handover control unit 500 or high-level layer interface 560. Specifically, path control unit 510 determines whether or not the packet is to be transmitted in accordance with path control information 520, and outputs the packet to second link control unit 530 through second link control interface 550 when it is determined that the packet is to be transmitted. Handover control unit 500 manages the handover state, and has a termination function of signaling to the radio base station router.

Handover control unit 500 de-encapsulates the encapsulated packets received from path control unit 510 through handover control interface 540, and outputs the packets to path control unit 510 again. Further, handover control section 500 changes the handover state in accordance with the link trigger information notified from second link control unit 530 through link trigger interface 570.

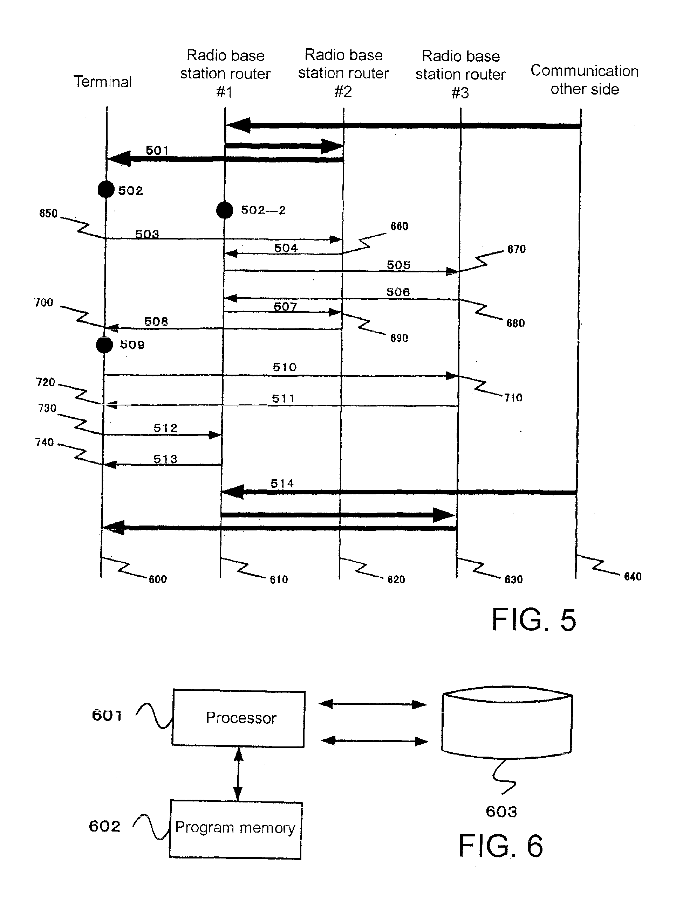

Next, detailed explanations are given of the operation of the mobile communication system according to the first embodiment of the present invention with reference to FIG. 5.

FIG. 5 is a time chart of the operation when the terminal performs the handover to radio base station router #3 in the tunnel forwarding state just after the terminal performs the handover from radio base station router #1 to radio base station router #2. Incidentally, in FIG. 5, transmission/reception packet sequence 600 of terminal 50, transmission/reception packet sequence 610 of radio base station router #1, transmission/reception packet sequence 620 of radio base station router #2, transmission/reception packet sequence 630 of radio base station router #3, and transmission/reception packet sequence 640 of communication other side 30 are illustrated.

The packets transmitted from communication other side 30 are distributed to the terminal through radio base station router #1 and radio base station router #2 (Step 501).

When terminal 50 determines the handover to radio base station router #3 (Step 502) because of deterioration in the signal reception power in the direction from radio base station router #2 to the terminal or the like, terminal 50 transmits PrRtSol message 650 to radio base station router #2. Because the transmission source IP address of the packets received by terminal 50 from communication other side 30 is the IP address of radio base station router #1, a HTT (Handover To Third) flag indicating the three-party handover is set in this PrRtSol message.

When radio base station router #2 receives PrRtSol message 650 (Step 503), or when radio base station router #2 determines the handover to radio base station router #3 (Step 502-2) because of deterioration of the wireless link quality in the direction from the terminal to radio base station router #2 or the like, radio base station router #2 transmits HTT request message 660 to radio base station router #1 (Step 504). HTT request message 660 includes CoA, which is currently used by terminal 50. Radio base station router #1, when receiving HTT request message 660, starts to buffer the packets addressed to terminal 50 and transmits HI message 670 to radio base station router #3 (Step 505).

Radio base station router #3, when determining to permit the handover, returns HACK message 680 to radio base station router #2 (Step 506), radio base station router #2 returns HTT response message 690 to radio base station router #2 (Step 507). HTT response message 690 includes CoA, which is used by the terminal at the handover destination.

Radio base station router #2 transmits PrRtAdv message 700 including CoA notified by HTT response message 690 to terminal 50 (Step 508).

Terminal 50, when receiving the PrRtAdv message, executes the link-level handover (Step 509).

When the link-level handover is completed, terminal 50 transmits FNA message 710 to radio base station router #3 (Step 510), and radio base station router #3, when receiving it, makes a response as NA message 720 (Step 511).

Terminal 50, which receives the NA massage, transmits FBU message 730 including CoA notified by PrRtAdv message 700 to radio base station router #1 (Step 512).

Radio base station router #1 returns FBACK message 740 (Step 513), and encapsulates and forwards the packets addressed to terminal 50, which are buffered, to the CoA notified by FBU message 730. In this way, the packets addressed to terminal, which are transmitted from commutation other side 30, are distributed to terminal 50 through radio base station router #1 and radio base station router #3 (Step 514).

As described above, the first embodiment of the present invention is explained, the present invention is not limited to the first embodiment, and, needless to say, the present invention may be varied within the scope of the present invention. For example, the first embodiment describes the three-party handover that successively performs handovers two times, however, the present invention is available to a case that handovers are successively performed three times or more.

Also, the signal reception power is used to determine the handover, however, a bit error rate and a frame error rate are also available.

Further, the embodiment is described in which the radio base station routers directly communicate with the terminal, however, the present invention is also available to a case that a relay node for performing only wireless/wired interface conversion exists between the terminal and the radio base station routers, and wireless communication is performed between the relay node and the terminal and wired communication is performed between the relay node and the radio base station router.

### (Second Embodiment)

Next, the second embodiment of the present invention is explained.

The radio base station and the terminal device according to the present invention may be configured by hardware, as is apparent from the explanations above, and also may be realized by a computer program.

FIG. 6 is a typical block diagram of an information processing unit implemented in the radio base station and the terminal device according to the present invention.

The information processing unit shown in FIG. 6 includes processor 601, program memory 602, and storage medium 603.

In the radio base station, processor 601 processes all or a part of functions of handover control unit 300, tunnel management unit 310, path control unit 330, wired link control unit 350, and wireless link control unit 360, which are described above, in accordance with the program stored in program memory 602. Also, all or a part of path information 340 is stored in storage medium 603.

Further, in the terminal device, processor 601 processes all or a part of functions of second link control unit 530, path control unit 510, and handover control unit 500, which are described above, in accordance with the program stored in program memory 602. Also, all or a part of path information 520 is stored in storage medium 603.

in this way, the same functions and operations as the above-mentioned embodiment can be attained by the processor in which each processing unit is operated by the program, and the memory and the storage medium into which information is stored.

As described above, the present invention has a configuration in which, before the terminal start the handover, the radio base station router serving as an anchor starts to buffer the packets addressed to the terminal, and, after the handover by the terminal is completed, the packets addressed to the terminal, which are buffered, are forwarded to a radio base station router, which is a handover destination, in the order of reception. Therefore, when the terminal performs a three-party handover, the order in which the terminal receives packets can be prevented from being changed.

Further, the present invention has a configuration in which, during the handover of the terminal, the packets addressed to the terminal are forwarded by using only two tunnels between the anchor radio base station router and the radio base station router from which the terminal device moves out and between the anchor radio base station router and the radio base station router to which the terminal device moves. Therefore, the tunnels managed by the radio base station router can be reduced, and the control in the radio base station router can be simplified.

Also, since the present invention has a configuration in which the communication is performed through only the anchor radio base station router and the radio base station router to which the terminal moves, it is possible to minimize the transmission delay in communication after handovers are successively performed.

## Claims

1. A mobile communication system including a plurality of radio base stations and a terminal device that can connect with said radio base stations, comprising:
deterioration detection means, in a state that said terminal device handovers from a first radio base station to a second radio base station and performs communication through a path which passes through said first radio base station, for detecting deterioration in a communication state between said terminal device and said second radio base station; and
distribution means, when said terminal device performs a handover to a third radio base station, caused by that the deterioration in said communication state is detected, in addition to the packets addressed to said terminal device, which start to be buffered by said first radio base station before said terminal device performs the handover and are buffered in said first radio base station after the handover of said terminal device is completed, for distributing packets addressed to said terminal device, which are newly received, to said terminal device through said third radio base station, in an order of reception.

2. The mobile communication system according to claim 1, wherein said deterioration detection means is configured to determine deterioration in said communication state by a detection result of a signal reception power.

3. The mobile communication system according to claim 1, wherein said deterioration detection means is configured to determine deterioration in said communication state by a bit error rate.

4. The mobile communication system according to anyone of claims 1 to 3, wherein said terminal device is provided with said deterioration detection means.

5. The mobile communication system according to anyone of claims 1 to 3, wherein said radio base station is provided with said deterioration detection means.

6. The mobile communication system according to anyone of claims 1 to 5, further comprising request means for requesting that said second radio base station makes said first radio base station buffer the packets addressed to said terminal device before said terminal device performs a handover.

7. The mobile communication system according to anyone of claims 1 to 6, wherein said terminal device has change means for changing a radio base station to which the terminal device is going to perform a handover, to another radio base station, in accordance with a result of researching a communication state with another radio base station.

8. A radio base station that is used while being connected to a terminal device, comprising:
deterioration detection means for detecting deterioration in a communication state with said terminal device;
detection means for detecting whether or not packets addressed to said terminal device are forwarded from another radio base station; and
storage means for temporarily storing the packets addressed to said terminal device when the deterioration in the communication state is detected and the packets addressed to said terminal device are not forwarded from another radio base station.

9. The radio base station according to claim 8, further comprising request means for requesting another radio base station to temporarily store the packets addressed to said terminal device when the deterioration in the communication state is detected and the packets addressed to said terminal device are forwarded from said another radio base station.

10. The radio base station according to claim 8, further comprising request means for requesting said another radio base station to temporarily store the packets addressed to said terminal device when a request that another base station temporarily buffers the packets addressed to said terminal device is received from said terminal device and the packets addressed to said terminal device are forwarded from said another radio base station.

11. A terminal device that can connect with a plurality of radio base stations, comprising:
deterioration detection means for detecting deterioration in a communication state with the radio base stations that are connected;
detection means for detecting whether or not the packets addressed to said terminal device are forwarded from another radio base station; and
request means for requesting said radio base station to buffer the packets addressed to said terminal device when the deterioration in the communication state is detected and the packets addressed to said terminal device are not forwarded from another radio base station.

12. The terminal device according to claim 11, further comprising means for requesting said radio base station to ask another radio base station to buffer the packets addressed to said terminal device when the deterioration in the communication state is detected and the packets addressed to said terminal device are forwarded from said another radio base station.

13. The terminal device according to claim 11 or 12, wherein said deterioration detection means measures a reception characteristic in a communication with said connected radio base station and detects deterioration in said communication state.

14. The terminal device according to claim 13, wherein said reception characteristic measured by said deterioration detection means is one of a signal reception power from said connected radio base station, a bit error rate, and a packet error rate, or a combination thereof.

15. A program that is used in a radio base station connected to a terminal device: said program making said radio base station function as:
means for determining deterioration in a communication state with a connected terminal device;
means for determining whether or not the packets addressed to said terminal device are forwarded from another radio base station; and
means for temporarily buffering the packets addressed to said terminal device when the deterioration in the communication state is detected and the packets addressed to said terminal device are not forwarded from another radio base station.

16. The program according to claim 15, making said radio base station function as means for requesting another radio base station to temporarily buffer the packets addressed to said terminal device when the deterioration in the communication state is detected and the packets addressed to said terminal device are forwarded from said another radio base station.

17. A program used in a terminal device that can be connected to a radio base station, said program making said terminal device function as:
means for determining deterioration in a communication state with a connected radio base station;
means for determining whether or not the packets addressed to said terminal device are forwarded from another radio base station; and
means for requesting said radio base station to temporarily buffer the packets addressed to said terminal device when the deterioration in the communication state is detected and the packets addressed to said terminal device are not forwarded from another radio base station.

18. The program according to claim 17, making said terminal device function as means for requesting said connected radio base station to ask another radio base station to temporarily buffer the packets addressed to said terminal device when the deterioration in the communication state is detected and the packets addressed to said terminal device are forwarded from said another radio base station.

19. A mobile communication method in a mobile communication system including a plurality of radio base stations and a terminal device that can connect with said radio base stations, comprising the steps of:
in a state that said terminal device handovers from a first radio base station to a second radio base station and performs communication through said first radio base station, when said terminal device performs a handover to a third radio base station, caused deterioration in a communication state between said terminal device and said second radio base station, making said first radio base station start to buffer packets addressed to said terminal device before said terminal device performs the handover; and
distributing packets addressed to said terminal device, which are newly received, to said terminal device through said third radio base station in an order of reception, in addition to the packets addressed to said terminal which are buffered in by said first radio base station, after the handover of the terminal is completed.

20. The mobile communication method according to claim 19, wherein said deterioration in the communication state is determined by a detection result of a signal reception power.

21. The mobile communication method according to claim 19, wherein said deterioration in the communication state is determined by a bit error rate.

22. The mobile communication method according to claim 19, wherein said deterioration in the communication state is determined by a packet error rate.

23. The mobile communication method according to anyone of claims 19 to 22, wherein said deterioration in the communication state is detected in said terminal device.

24. The mobile communication method according to anyone of claims 19 to 22, wherein said deterioration in the communication state is detected in said radio base station.

25. The mobile communication method according to anyone of claims 19 to 24, further comprising the step of making said second radio base station request said first radio base station to buffer the packets addressed to said terminal device before said terminal device performs a handover.

26. The mobile communication method according to anyone of claims 19 to 25, further comprising the step of said terminal device changing a radio base station to which the terminal device is going to perform a handover to another radio base station in accordance with a search result of the communication state with another radio base station.
